# EUROPEAN PATENT SPECIFICATION

(11) **EP 0 755 845 B1**
(45) Date of publication and mention of the grant of the patent: **22.03.2000**
(21) Application number: 96305402.8
(22) Date of filing: 23.07.1996
(51) Int. Cl.: B62D 5/04

(54) **Centre-takeoff electric power steering apparatus**
Elektrische Servolenkung mit Mittelabgriff
Direction assistée électrique à entraînement central

(30) Priority: 28.07.1995 JP 19384195
(43) Date of publication of application: 29.01.1997
(73) Proprietor: HONDA GIKEN KOGYO KABUSHIKI KAISHA, Minato-ku Tokyo (JP)
(72) Inventor: Yamawaki, Shigeru, Wako-shi, Saitama-ken (JP); Shimizu, Yasuo, Wako-shi, Saitama-ken (JP); Watanabe, Katsuji, Wako-shi, Saitama-ken (JP)
(74) Representative: Piésold, Alexander J.

(56) References cited:
- EP-A- 0 659 628
- DE-C- 4 336 286
- GB-A- 2 094 730

## Description

The present invention relates to a center-takeoff electric power steering apparatus in which right and left tie-rods for steering wheels of a vehicle are disposed transversely centrally of a vehicle body.

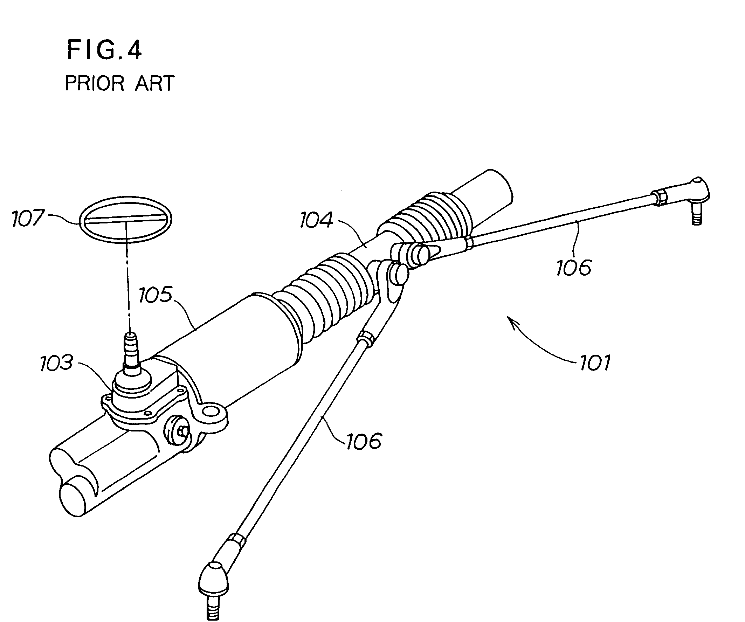

Conventionally, a center-takeoff electric power steering apparatus with tie-rods positioned transversely centrally of a vehicle body for steering wheels of a vehicle is known from, for example, Japanese Utility Model Laid-Open Publication No. SHO 63-76580 entitled "Electric Power Steering Apparatus". This and another known electric power steering apparatuses are shown in Figs. 4-6 hereof.

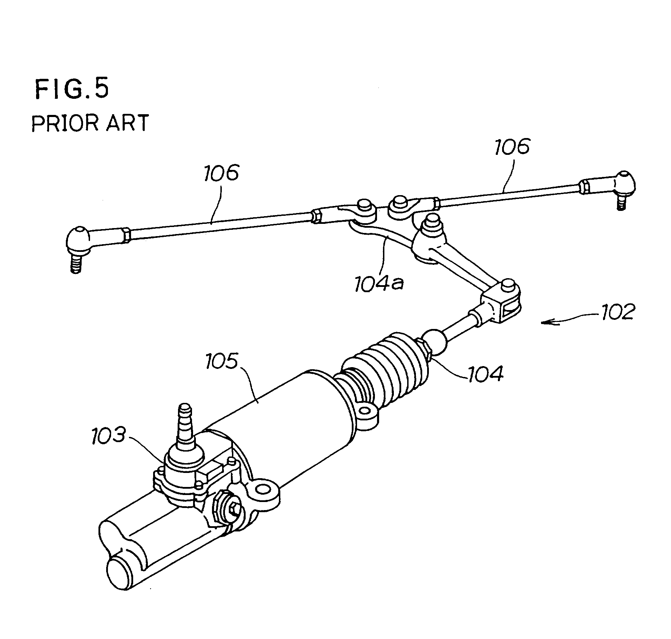

In the electric power steering apparatuses 101, 101 shown in Fig. 4 and Fig. 5, a rotational motion of a steering wheel 107 is converted into a linear motion by means of a rack and pinion mechanism 103. A linearly movable rack shaft 104 has a power-assist section 105. The connection ends of right and left tie-rods 106, 106 responsive to the displacement of the rack shaft 104 shown in Fig. 4, or the connection ends of the right and left tie-rods 106, 106 responsive to the displacement of a link member 104a for converting the direction of motion of the rack shaft 104 shown in Fig. 5, are provided transversely centrally of a vehicle body. The vehicle wheel toe variation upon change in height of the vehicle body by the tie-rods 106, 106 can be kept to a minimum. The vehicle wheels are steered by the power-assist section 105 comprising an electric motor producing an auxiliary torque which assists in a steering force from the steering wheel 107.

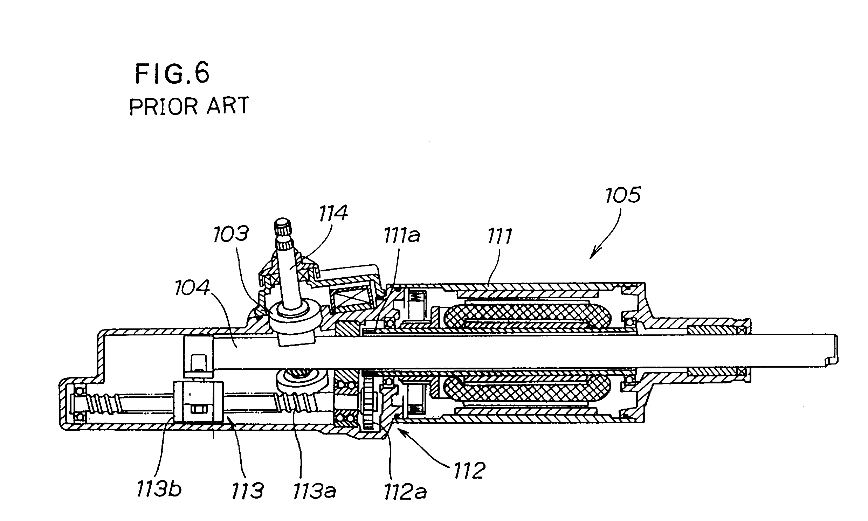

Fig. 6 illustrates the internal construction of the power-assist section 105 of Fig. 4 and Fig. 5. The power-assist section 105 has an electric motor 111 with an output shaft 111a connected through a driven gear 112a of a reduction gear mechanism 112 to a ball screw mechanism 113 having a threaded shaft 113a and a nut member 113b so that it can assist in the advance and retreat movements of the rack shaft 104 by the rotational motion of the threaded shaft 113a.

In the power steering apparatus, since the ball screw mechanism 113 and the pinion shaft 114 of the rack and pinion mechanism 103 are unified, the power-assist section 105 is rendered compact to thereby achieve the miniaturization of the apparatus as a whole.

However, in the center-takeoff electric power steering apparatus, the position of the pinion shaft 114 of the rack and pinion mechanism 103 is delimited forwardly of a driver seat. Also, the connections of the tie-rods 106, 106 are delimited transversely centrally of the vehicle body. Therefore, to arrange the power-assist section 105 coaxially with the rack shaft 104 for a length from the pinion shaft 114 to the transverse center where the tie-rods 106, 106 are connected, the threaded shaft 113a of the ball screw mechanism 113 must be formed separately from the rack shaft 104, whereby the rack shaft 104 inevitably becomes large in diameter while it should have a reduced diameter in terms of the layout of an engine space. The same applies when connecting the tie-rods 106, 106 by means of the link 104a for conversion of the direction of motion.

It is desirable to provide a center-takeoff electric power steering apparatus which permits a rack shaft to have a reduced diameter.

According to the present invention, there is provided a center-takeoff electric power steering apparatus of the above described known type and which differs therefrom in that the auxiliary torque produced by the electric motor of the electric power assist section is applied between the steering wheel and the rack and pinion mechanism.

Preferably, the auxiliary torque produced by the electric motor of the power-assist section is supplied to a pinion shaft of the rack and pinion mechanism.

Preferably, the pinion shaft is comprised of an input shaft for receiving a steering force, an output shaft having a pinion at a lower end thereof for meshed engagement with a rack shaft, and a torsion bar being capable of exhibiting a torsional displacement in response to the steering force.

The electric power-assist section preferably includes an electric motor, a motion converting member for converting rotational displacement into axial displacement, an output transformer for transforming the axial displacement into an electrical signal, a controller for controlling the electric motor based on the electric signal, and a torque supply member for supplying a rotational torque from the electric motor to the output shaft. The motion converting member has a generally cylindrical configuration and is slide fit into the input shaft axially thereof for converting rotational displacement thereof into axial displacement. The axial displacement is converted into an electrical signal for controlling the electric motor, whereafter the auxiliary torque from electric motor is transmitted through the torque supply member to the rack shaft.

A preferred embodiment of the present invention will hereinafter be described by way of example with reference to the accompanying drawings, in which:
Fig. 1 is a front elevational view illustrating dominant portions, partially cut way, of a center-takeoff electric power steering apparatus according to the present invention;
Fig. 2 is an enlarged cross sectional view taken along line A-A of Fig. 1;
Fig. 3 is an enlarged cross sectional view taken along line B-B of Fig. 2;
Fig. 4 is a perspective view illustrating dominant portions of a conventional center-takeoff electric power steering apparatus;
Fig. 5 is a perspective view illustrating dominant portions of another conventional center-takeoff electric power steering apparatus; and
Fig. 6 is a cross sectional illustrating the internal construction of the power-assist section as shown in Fig. 4 and Fig. 5.

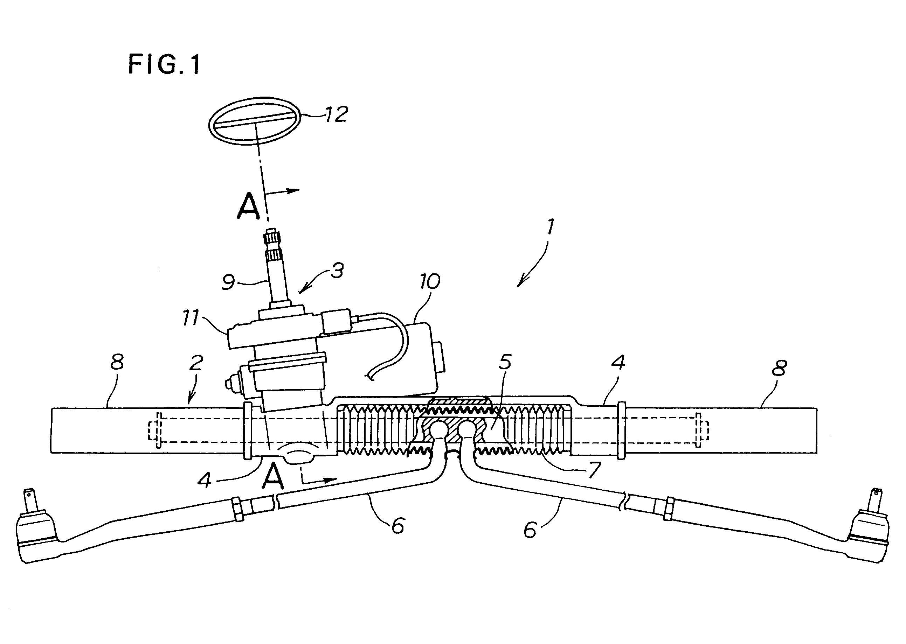

Reference is initially taken to Fig. 1 wherein dominant portions of a center-takeoff electric power steering apparatus according to the present invention are shown. The power steering apparatus 1 includes a rack and pinion mechanism provided in a steering system and having a rack shaft unit 2, a pinion shaft 9 and a power assist section 3.

The rack shaft unit 2 includes a pair of right and left support portions 4, 4 and a rack shaft 5 slidably supported by the support portions 4, 4. A pair of right and left tie-rods 6, 6 is connected to a vehicle-widthwise center of the rack shaft 5. The connections of the tie-rods 6, 6 are covered by a slidably fit dust boot 7. Both ends of the rack shaft unit 2 are provided with caps 8, 8 covering a range of stroke of the rack shaft 5. Each top end of the tie-rods is connected to a knuckle (not shown).

The power assist section 3 has an electric motor 10 for supplying an assist torque to the pinion shaft 9 to be meshed with the rack shaft 5. Dominant portion of the pinion shaft 9 and part of the electric motor 10 are accommodated within a housing 11. The power assist section 3 and the pinion shaft 9 are detachably secured to the rack shaft unit 2. The top end of the pinion shaft 9 is connected to a steering wheel 12.

In the electric power steering apparatus 1 thus arranged, an auxiliary torque from the electric motor 10 is added to a steering torque generated in the steering system by turning the steering wheel 12 and transmitted through the pinion shaft 9, rack shaft 5 and tie-rods 6, 6 to steer vehicle wheels (not shown).

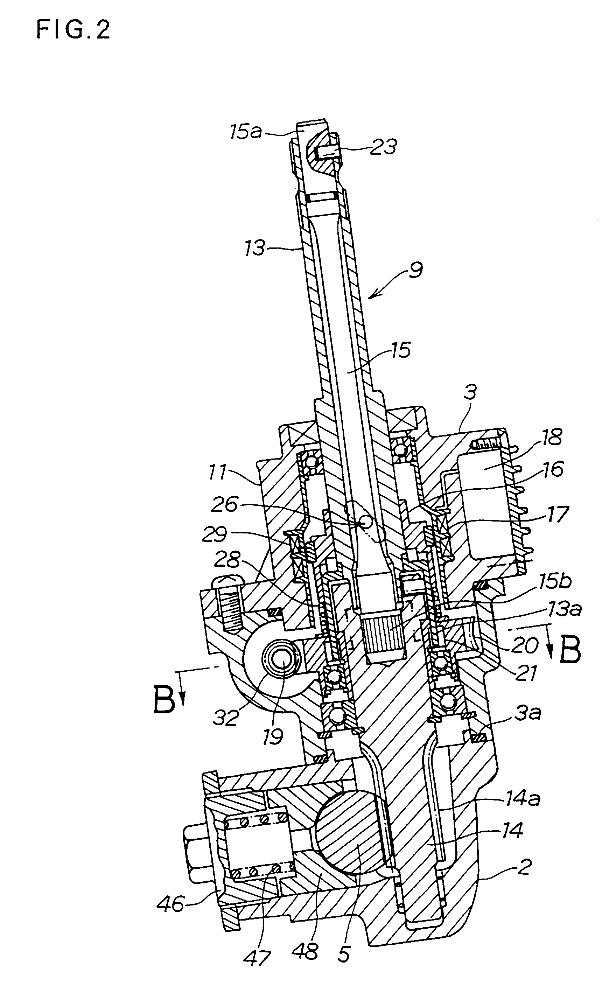

Referring to Fig. 2, the pinion shaft 9 is rotatably supported in the housing 11 and comprised of a cylindrical input shaft 13 to be turned by the steering wheel 12, an output shaft 14 capable of meshing engagement with the rack shaft 5 and a torsion bar 15 being capable of exhibiting relative torsional displacement in response to a torque applied between the input and output shafts 13, 14.

Other than the electric motor 10, the power assist section 3 includes a motion converting member 16 having a slider for converting the torsional displacement into axial displacement, output transformer 17 for transforming the axial displacement into an electrical signal, a controller 18 for controlling devices in response to the electrical signal from the output transformer 17, a motor shaft 19 for outputting a rotational torque of the electric motor 10, a torque supply member 20 for supplying the rotational torque from the motor shaft 19 to the output shaft 14, and a clutch 21 for controlling torque transmission.

One end 15a of the torsion bar 15 is secured to the output shaft 13 by means of a pin 23 while an opposite end 15b thereof is serrated and connected to the output shaft 14. The torsional displacement of the torsion bar 15 is equivalent to the difference in displacement caused by an applied torque, of the output shaft 14 relative to the input shaft 13.

The motion converting member 16 has an inclined guide portion 26 and an axial guide portion not shown and is cylindrical in shape. The motion converting member 16 is slidably fit around the input shaft 13 and extends to the output shaft 14, whereby it is rendered capable of being displaced axially in accordance with the relative torsional displacement. The amount of displacement of the motion converting member 16 at this time is proportionate to a steering torque and converted into an electrical signal by the output transformer 17. Designated by reference numeral 28 is a spring for biasing the motion converting member 16 axially. Each of the inclined guide portion 26 and the axial guide portion is comprised of a pin and a guide groove for guiding the pin. The axial guide portion restricts rotation of the motion converting member 16 relative to the input shaft 13.

Since the motion converting member 16 is caused by the inclined guide portion 26 to slide along the length of the input shaft 13 in response to the rotation of the latter, the torsional displacement of the torsion bar 15 is converted into the axial displacement in accordance with the direction and magnitude of the steering torque, whereupon clearance tolerance is kept to a minimum by the inclined guide portion 26.

Specifically, the output transformer 17 may be a differential transformer for outputting an electrical signal corresponding to the position of a conductor ring 29 disposed on an outer periphery of the motion converting member 16, or a variable inductance transformer for detecting changes in inductance. In other words, the output transformer 17 serves as a steering torque detector for converting the motion of the motion converting member 16 sliding in accordance with the steering torque into an electrical signal.

The torque supply member 20 takes the form of a ring member rotatable about the output shaft 14 and has the clutch 21 on a side proximate to the input shaft 13. The motor shaft 19 is in the form of a worm with a worm reduction portion 32 and meshable with the torque supply member 20.

The power assist section 3 and pinion shaft 9 are releasably attached to the rack shaft unit 2 with a lower end of the housing 11 being sealed by means of a seal member 3a. A lower end of the output shaft 14 has a pinion gear 14a meshable with the rack shaft 5. The rack shaft 5 is urged to be brought into meshing engagement with the pinion gear 14a of the output shaft 14 by the resiliency of a compression spring 47 interposed between a slide member 48 for slidably supporting the rack shaft 5 and a cap 46.

When a steering torque is applied to the input shaft 13, the input shaft 13 causes the output shaft 14 to rotate via the torsion bar 15. At this time, the motion converting member 16 axially slides as explained above in accordance with the difference in the relative displacement, exhibited in the torsion bar 15, between the input and output shafts 13, 14. The output transformer 17 sends out an electrical signal corresponding to the steering torque to the controller 18 which controls a torque generated by the electric motor 10 in accordance with the steering torque. The torque generated by the electric motor 10 is supplied via the clutch 21 to the output shaft 14 and combined with the steering torque to drive the rack shaft 5 together.

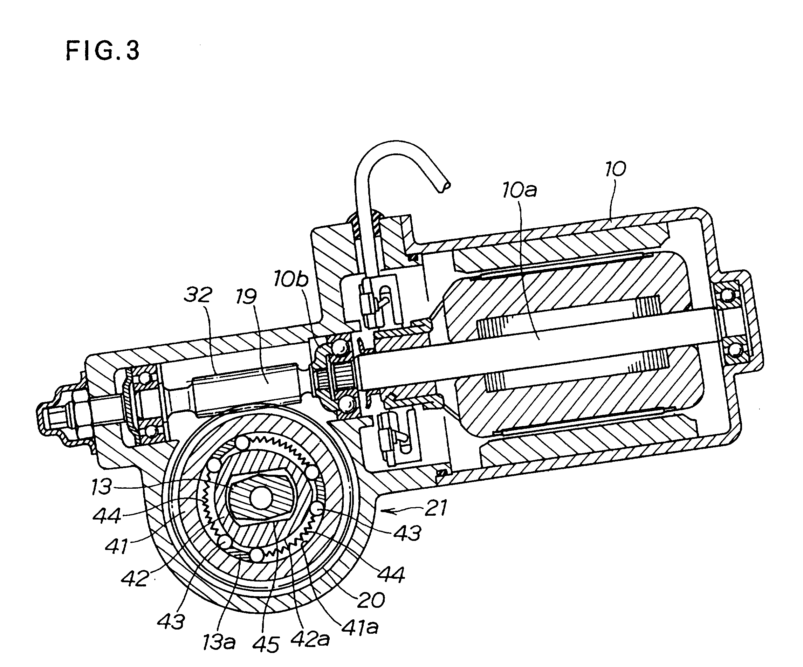

In Fig. 3, the clutch 21 is comprised of an input side transmission member 41 at an outer peripheral side thereof, an output side transmission member 42 having a substantially triangular cross section defined by three arc-shaped sides, three pairs of rollers 43 engageable with both transmission members 41, 42, three springs 44 each disposed between the rollers 43 of each pair for urging the rollers 43 toward the direction of engagement thereof, and three fork members 13a for delimiting the positions of the rollers 43. The fork members 13a are formed integrally with the input shaft 13 and extends downwardly from the lower end of the input shaft 13.

The input side transmission member 41 is provided on an internal periphery of the torque supply member 20 in a unified relation thereto. Between an internal peripheral surface 41a of the input side transmission member 41 and an outer peripheral surface 42a of the output side transmission member 42, there are defined wedge-shaped spaces allowing engagement/disengagement of the rollers 43 (right and left spaces separated about the apex of a triangle of the output side transmission member 42). When the rollers 43 are brought into engagement with a corner portion of the wedge-shaped spaces, a one way clutch is formed. At the center of the output side transmission member 42, there is formed a rotation restricting portion 45 composed of a nearly square aperture. By causing the input shaft 13 to be fit into the rotation restricting portion 45 with a predetermined angle of play, excessive relative rotation between the input shaft 13 and the output side transmission member 42 can be restricted.

The torque supply member 20 forming the input side of the clutch 21 is connected to a main shaft 10a of the electric motor 10 by means of the worm reduction portion 32 of the motor shaft 19 and a planetary reduction portion 10b capable of restricting a transmitted torque by its rolling members such as balls, and is supplied with a torque, corresponding to the steering torque, from the electric motor 10.

When the rotational angle of the fork member 13a is small, the rollers are not engaged between the input side transmission member 41 and the output side transmission member 42. Thus, the clutch 21 does not allow transmission of a torque to the output side transmission member 42.

As the rotational angle of the fork member 13a becomes large, the rollers 43 become engaged between the input side transmission member 41 and the output side transmission member 42, whereby the clutch 21 is made to act as a one way clutch, causing the input side transmission member 41 and fork member 13a to rotate in the same direction and thus effecting transmission of the torque to the output side transmission member 42. In other words, by rotation of the fork member 13a, torque transmission can be controlled in accordance with the magnitude of the steering torque applied to the input shaft 13 and the rotational direction of the fork 13a.

In the center-takeoff electric power steering apparatus arranged as explained above, the auxiliary torque generated by the electric motor 10 of the power assist section 3 provided in the steering system is supplied between the steering wheel 12 and the rack and pinion mechanism, whereby the apparatus is freed from spatial restrictions posed by the takeoff of the tie rods 6, 6. This further allows the rack shaft 5 to be made small in radial size.

Particularly, by supplying the auxiliary torque to the pinion shaft 9 of the rack and pinion mechanism, it becomes possible to construct the steering system without any change to the design strength of the shaft coupling between the steering wheel 12 and the pinion shaft. As a result, it becomes further possible to achieve compatibility by the unit of the pinion shaft 9 in a broad range including non-assist type center-takeoff electric power steering apparatuses which do not have the power assist section 3. Further, by unifying the power assist section 3 with the pinion shaft 9, they can be handled independently of the steering system, thus resulting in the reduction of an operational area or space for conducting characteristic tests of the power assist section and for maintenance of the latter, and in increased efficiency of such operations.

It should be readily appreciated that the present invention exhibits the same operation and produces the same results as in the above-explained apparatus when applied to a center-takeoff electric power steering apparatus wherein the connection of the tie rods is achieved by use of a link member for converting the direction of motion of the rack shaft.

Although there has been described what is at present considered to be the preferred embodiment of the present invention, it will be understood that the invention may be embodied in other specific forms without departing from the essential characteristics thereof. The present embodiment is therefore to be considered in all respects as illustrative, and not restrictive. The scope of the invention is indicated by the appended claims rather than by the foregoing description.

## Claims

1. A center-takeoff electric power steering apparatus (1) comprising a rack and pinion mechanism for converting rotational displacement of a steering system of a vehicle into linear displacement and a pair of right and left tie-rods (6, 6) taking off from a transverse center of the vehicle for steering vehicle wheels based on the linear displacement,
said apparatus further including an electric power assist section (3) disposed in said steering system for assisting in a steering force in said steering system,
wherein an auxiliary torque produced by an electric motor (10) of said electric power assist section (3) is applied between a steering wheel (12) and said rack and pinion mechanism.

2. The electric power steering apparatus of Claim 1, wherein said power assist section (3) is arranged to supply said auxiliary torque produced by said electric motor (10) to a pinion shaft (9) of said rack and pinion mechanism.

3. The electric power steering apparatus of Claim 2, therein said pinion shaft (9) comprises an input shaft (13) to which said steering force is transmitted from said steering wheel (12), an output shaft (14) capable of meshing with a rack shaft (5) of said rack and pinion mechanism, and a torsion bar (15) capable of exhibiting relative torsional displacement in response to a torque to be applied between said input and output shafts (13, 14).

4. The electric power steering apparatus of any preceding claim, wherein said electric power assist section (3) comprises said electric motor (10), a motion converting member (16) for converting the rotational displacement into axial displacement, an output transformer (17) for transforming the axial displacement into an electrical signal, a controller (18) for controlling said electric motor (10) based on said electrical signal, and a torque supply member (20) for supplying a rotative torque from said electric motor (10) to said output shaft (14).

5. The electric power steering apparatus of Claim 4, wherein said motion converting member (16) is generally in the form of a cylinder and fit axially slidably around said input shaft (13) for converting the rotational displacement of said input shaft (13) into said axial displacement.

## Patentansprüche

1. Elektroantrieblenkvorrichtung mit Mittenabgriff (1), umfassend einen Zahnstangenmechanismus zum Wandeln einer Drehverlagerung eines Lenksystems eines Fahrzeugs in eine Linearverlagerung sowie ein Paar von rechten und linken Zugstangen (6, 6), die von einer Mitte in Querrichtung des Fahrzeugs ausgehen, zum Lenken von Fahrzeugrädern basierend auf der Linearverlagerung,
wobei die Vorrichtung ferner einen Elektroantriebunterstützungsabschnitt (3) aufweist, der in dem Lenksystem angeordnet ist, um eine Lenkkraft in dem Lenksystem zu unterstützen,
wobei ein durch einen Elektromotor (10) des Elektroantriebunterstützungsabschnitts (3) erzeugtes zusätzliches Drehmoment zwischen einem Lenkrad (12) und dem Zahnstangenmechanismus ausgeübt wird.

2. Elektroantrieblenkvorrichtung nach Anspruch 1, wobei der Antriebunterstützungsabschnitt (3) dazu angeordnet ist, das durch den Elektromotor (10) erzeugte zusätzliche Drehmoment einer Ritzelwelle (9) des Zahnstangenmechanismus zuzuführen.

3. Elektroantrieblenkvorrichtung nach Anspruch 2, wobei die Ritzelwelle (9) umfaßt: eine Eingangswelle (13), der die Lenkkraft von dem Lenkrad (12) übertragen wird, eine Ausgangswelle (14), die für einen Eingriff mit einer Zahnstange (5) des Zahnstangenmechanismus geeignet ist, sowie einen Torsionsstab (15), der dazu geeignet ist, in Reaktion auf ein zwischen der Eingangswelle und der Ausgangswelle (13, 14) auszuübendes Drehmoment eine Relativdrehverlagerung zu zeigen.

4. Elektroantrieblenkvorrichtung nach einem vorangehenden Anspruch, wobei der Elektroantriebunterstützungsabschnitt (3) den Elektromotor (10), ein Bewegungswandlungsteil (16) zum Wandeln der Drehverlagerung in eine Axialverlagerung, einen Ausgangsumformer (17) zum Umformen der Axialverlagerung in ein elektrisches Signal, eine Steuer/Regeleinrichtung (18) zum Steuern/Regeln des Elektromotors (10) basierend auf dem elektrischen Signal sowie ein Drehmomentzufuhrteil (20) zum Zuführen eines Drehmoments von dem Elektromotor (10) zu der Ausgangswelle (14) umfaßt.

5. Elektroantrieblenkvorrichtung nach Anspruch 4, wobei das Bewegungswandlungsteil (16) allgemein die Form eines Zylinders besitzt und axial verschiebbar um die Eingangswelle (13) eingesetzt ist, um die Drehverlagerung der Eingangswelle (13) in die Axialverlagerung zu wandeln.

## Revendications

1. Appareil de direction assistée électrique à entraînement central (1) comprenant un mécanisme à crémaillère permettant de convertir le déplacement en rotation d'un système de direction d'un véhicule en déplacement linéaire et une paire de barres d'accouplement droite et gauche (6, 6) partant d'un centre transversal du véhicule pour diriger les roues du véhicule sur la base du déplacement linéaire,
ledit appareil incluant de plus une section d'assistance électrique (3) disposée dans ledit système de direction permettant d'assister une force de direction dans ledit système de direction,
dans lequel un couple auxiliaire produit par un moteur électrique (10) de ladite section d'assistance électrique (3) est appliqué entre un volant de direction (12) et ledit mécanisme à crémaillère.

2. Appareil de direction assistée électrique selon la revendication 1, dans lequel ladite section d'assistance (3) est faite pour fournir ledit couple auxiliaire produit par ledit moteur électrique (10) à un arbre de pignon (9) dudit mécanisme à crémaillère.

3. Appareil de direction assistée électrique selon la revendication 2, dans lequel ledit arbre de pignon (9) comprend un arbre d'entrée (13) auquel la force directrice est transmise par ledit volant de direction (12), un arbre de sortie (14) pouvant se mettre en prise avec un arbre de crémaillère (5) dudit mécanisme de crémaillère, et une barre de torsion (15) pouvant présenter un déplacement en torsion relatif en réponse à un couple à appliquer entre lesdits arbres d'entrée et de sortie (13, 14).

4. Appareil de direction assistée électrique selon l'une quelconque des revendications précédentes, dans lequel ladite section d'assistance électrique (3) comprend ledit moteur électrique (10), un organe de conversion de déplacement (16) permettant de convertir le déplacement en rotation en un déplacement axial, un transformateur de sortie (17) permettant de transformer le déplacement axial en un signal électrique, un circuit de commande (18) permettant de commander ledit moteur électrique (10) sur la base dudit signal électrique, et un organe de fourniture de couple (20) permettant de fournir un couple de rotation depuis ledit moteur électrique (10) audit arbre de sortie (14).

5. Appareil de direction assistée électrique selon la revendication 4, dans lequel ledit organe de conversion de déplacement (16) est en général de la forme d'un cylindre et s'ajuste de manière glissante suivant l'axe autour dudit arbre d'entrée (13) pour convertir le déplacement en rotation dudit arbre d'entrée (13) en ledit déplacement axial.
